# EUROPÄISCHE PATENTANMELDUNG

(11) **EP 0 551 123 A1**
(43) Veröffentlichungstag der Anmeldung: **14.07.1993**
(21) Anmeldenummer: 93100204.2
(22) Anmeldetag: 08.01.1993
(51) Int. Cl.: A22B 5/08, A22C 21/04, A22B 5/12

(54) **Verfahren und Vorrichtung zum Brühen von Schlachttierkörpern, insbesondere Schweinekörpern**

(30) Priorität: 09.01.1992 DE 4200371
(71) Anmelder: Banss Maschinenfabrik GmbH & Co. KG, D-35216 Biedenkopf (DE)
(72) Erfinder: Schreiber, Helmut, W-8750 Aschaffenburg (DE)
(74) Vertreter: Klunker . Schmitt-Nilson . Hirsch

(57) **Zusammenfassung**

Verfahren zum Brühen von Schlachttierkörpern, insbesondere Schweinekörpern (17), mit einer eine Wasseraustrittseinrichtung (12) aufweisenden Brühstrecke (20) in einem Wasserkreislauf (Brühkreislauf (13)), der mit einem Wasserbehälter (11) zur Aufnahme von aus der Wasseraustrittseinrichtung (12) austretendem Brühwasser, einer Pumpleitung (14) zur Zuleitung eines im Wasserbehälter (11) aufgenommenen, stationären Brühwasservolumens zur Wasseraustrittseinrichtung (12) und einer Wärmezuführeinrichtung (22) zur Temperierung des Brühwassers auf eine vorgegebene Temperatur (Brühtemperatur) versehen ist, wobei ein Brühwasserteilvolumen (30) aus dem Brühkreislauf (13) heraus, durch die Wärmezuführeinrichtung (22) hindurch und als Temperierungsvolumenstrom (31) mit einer Temperatur oberhalb der Brühtemperatur in den Brühkreislauf (13) zurückgeführt wird, sowie eine Vorrichtung zur Durchführung des Verfahrens.

## Beschreibung

Die Erfindung betrifft ein Verfahren und eine Vorrichtung zum Brühen von Schlachttierkörpern, insbesondere Schweinekörpern, gemäß dem Oberbegriff der Patentansprüche 1 und 9.

Zur Vorbereitung der Zerlegung von Schweinekörpern in Teilstücke, die zur Weiterverarbeitung im oder außerhalb des Schlachthofs bestimmt sind, ist es notwendig, die Körperbehaarung von den Schlachttierkörpern zu entfernen. Um eine entsprechende Enthaarung der Schlachttierkörper zu vereinfachen, werden die Schlachttierkörper vor dem eigentlichen Enthaarungsvorgang gebrüht. Hierzu werden die längs eines Hakenförderers bewegten Schlachttierkörper eine Brühstrecke entlanggefördert, wobei die Schlachttierkörper während des Fördervorgangs in einen mit Brühwasser gefüllten Brühtrog eingetaucht werden.

Die Brühstrecke ist mit Wasseraustrittseinrichtungen versehen, die in einem gemeinsamen Wasserkreislauf mit einem Wasserbehälter zur Aufnahme von aus den Wasseraustrittseinrichtungen austretendem Brühwasser, einer Pumpleitung zur Zuleitung eines im Wasserbehälter aufgenommenen Brühwasservolumens zu den Wasseraustrittseinrichtungen und einer Wärmezuführeinrichtung zur Temperierung des Brühwassers auf eine vorgegebene Temperatur angeordnet sind. Mittels der Wärmezuführeinrichtung kann neben der Aufheizung des Brühwassers auf die zum Brühen erforderliche Temperatur auch eine zumindest teilweise Entkeimung des kontinuierlich zirkulierenden Brühwasservolumens durchgeführt werden. Das Ausmaß der durch die Beheizung des Brühwassers erreichbaren Entkeimung ist dabei unmittelbar von der erzielten Brühwassertemperatur abhängig.

Bei dem beschriebenen, derzeit üblichen Verfahren erweist es sich als nachteilig, daß die Entkeimungstemperatur durch die Brühwassertemperatur begrenzt ist. Für das Brühen hat sich eine Temperatur des Brühwassers von 60°C - 61°C als optimal herausgestellt. Eine Erwärmung des Brühwassers auf eine Temperatur oberhalb dieses Bereiches hat zum einen einen erhöhten Energieverbrauch zur Folge, zum anderen können beim Brühen von Schweinekörpern nachteilige Verbrühungen auftreten. Hinsichtlich einer möglichst weitgehenden Entkeimung des Brühwassers erweist sich eine Brühwassertemperatur in dieser Höhe jedoch als unzureichend.

Der vorliegenden Erfindung liegt daher die Aufgabe zugrunde, ein Verfahren und eine Vorrichtung der eingangs genannten Art zu schaffen, mit dem beziehungsweise mit der eine verbesserte Entkeimung beim Brühen von Schlachttierkörpern möglich ist.

Zur Lösung dieser Aufgabe weist das erfindungsgemäße Verfahren die Merkmale des Anspruchs 1 auf.

Bei dem erfindungsgemäßen Verfahren wird ein Teil des im Wasserkreislauf zum Brühen (Brühkreislauf) zirkulierenden Wassers aus dem Brühkreislauf abgezweigt und nach Aufheizung in der Wärmezuführeinrichtung in den Brühkreislauf zurückgeleitet. In dem so gebildeten Temperierungskreislauf wird das Brühwasserteilvolumen beim Durchströmen der Wärmezuführeinrichtung auf eine Temperatur oberhalb der Brühtemperatur aufgeheizt. Hierdurch wird eine weitergehende Entkeimung des Brühwassers erreicht als bei einer Aufheizung des Brühwassers lediglich auf Brühtemperatur, die sich als Mischtemperatur ergibt, wenn das Brühwasserteilvolumen in das im Brühkreislauf zirkulierende Brühwasservolumen zurückgeführt wird. Da das im Temperierungskreislauf zirkulierende Brühwasserteilvolumen in jedem Fall kleiner ist als das im Brühkreislauf zirkulierende Brühwasservolumen, ist eine Aufheizung des Brühwasserteilvolumens auf die oberhalb der Brühtemperatur liegende Entkeimungstemperatur möglich, ohne daß hierzu eine erhöhte Energiezufuhr notwendig ist.

Die Durchführung des erfindungsgemäßen Verfahrens ermöglicht verschiedene Verfahrensvarianten hinsichtlich der Entnahme und der Zurückführung des Brühwasserteilvolumens in das im Brühkreislauf zirkulierende Brühwasservolumen. So besteht neben der Möglichkeit, das Brühwasserteilvolumen der den Wasserbehälter mit der Wasseraustrittseinrichtung verbindenden Pumpleitung zu entnehmen und nach Durchführung durch die Wärmezuführeinrichtung in den Wasserbehälter zurückzuführen, auch die Möglichkeit, das Brühwasserteilvolumen der Pumpleitung zu entnehmen und nach Durchführung der Wärmezuführeinrichtung in dieselbe zurückzuführen, sowie die Möglichkeit, das Brühwasserteilvolumen dem Wasserbehälter zu entnehmen und nach Durchströmung der Wärmezuführeinrichtung in die Pumpleitung zurückzuführen.

Bei einer bevorzugten Verfahrensvariante wird das Brühwasserteilvolumen dem Wasserbehälter entnommen, durch die Wärmezuführeinrichtung hindurchgeleitet und in den Wasserbehälter zurückgeführt. Insbesondere die Zurückführung des als Temperierungsvolumenstrom aus der Wärmezuführeinrichtung ausströmenden Brühwasserteilvolumens in den Wasserbehälter des Brühkreislaufs ermöglicht ein regelungstechnisch einfaches Konstanthalten der Brühwassertemperatur, da hier der aufgeheizte, relativ kleine Temperierungsvolumenstrom auf das große quasistationäre Brühwasservolumen im Wasserbehälter des Brühwasserkreislaufs trifft, wo die Durchmischung stattfindet.

Um eine weitgehende Entkeimung im Brühwasserteilvolumenstrom zu erreichen, sollte das durch die Wärmezuführeinrichtung strömende Brühwasserteilvolumen auf etwa 75°C aufgeheizt werden, so daß auch bei einer gegebenenfalls stattfindenden Zumischung von Kaltwasser zum Temperierungsvolumenstrom zur Ergänzung von Volumenverlusten im Brühkreislauf beim Eintritt des Temperierungsvolumenstroms in den Wasserbehälter eine Temperatur oberhalb 60°C ermöglicht ist.

Die erfindungsgemäße Vorrichtung weist die Merkmale des Anspruchs 9 auf.

Bei der erfindungsgemäßen Vorrichtung ist die Wärmezuführeinrichtung in einem weiteren, mit dem Brühkreislauf verbundenen Temperierungskreislauf angeordnet, der zur Umwälzung eines Brühwasserteilvolumens dient. Hinsichtlich des Anschlusses einer Pumpleitung des Temperierungskreislaufs an den Brühkreislauf bestehen verschiedene Möglichkeiten. Neben dem Anschluß der Pumpleitung eingangsseitig an die Pumpleitung des Brühkreislaufs und ausgangsseitig an den Wasserbehälter besteht auch die Möglichkeit, die Pumpleitung eingangs- sowie ausgangsseitig mit der Pumpleitung des Brühkreislaufs, oder die Pumpleitung eingangsseitig mit dem Wasserbehälter und ausgangsseitig mit der Pumpleitung des Brühkreislaufs zu verbinden.

Bei einer bevorzugten Ausführungsform ist die Pumpleitung eingangs- sowie ausgangsseitig mit dem Wasserbehälter des Brühwasserkreislaufs verbunden.

Weitere Merkmale der erfindungsgemäßen Vorrichtung entsprechend den weiteren Unteransprüchen sowie bevorzugte Ausführungsformen werden anhand der Zeichnungen nachfolgend näher erläutert. Es zeigen:
- Fig. 1: eine erste Ausführungsform der erfindungsgemäßen Vorrichtung;
- Fig. 2: eine zweite Ausführungsform der erfindungsgemäßen Vorrichtung.

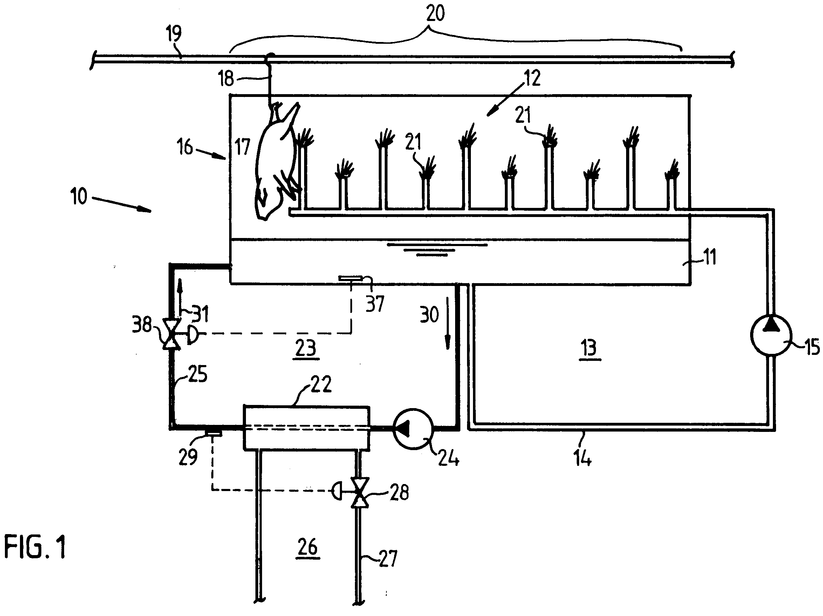

Die in Fig. 1 dargestellte Vorrichtung 10 zum Brühen von Schlachttierkörpern 17 weist eine oberhalb eines Wasserbehälters 11 angeordnete Wasseraustrittseinrichtung 12 auf, die zur Bildung eines Brühkreislaufs 13 über eine Pumpleitung 14, in der eine Umwälzpumpe 15 angeordnet ist, mit dem Wasserbehälter 11 verbunden ist. Bei dem hier dargestellten Ausführungsbeispiel bildet der Wasserbehälter 11 einen Teil eines Brühtunnels 16, in dem die Wasseraustrittseinrichtung 12 angeordnet ist.

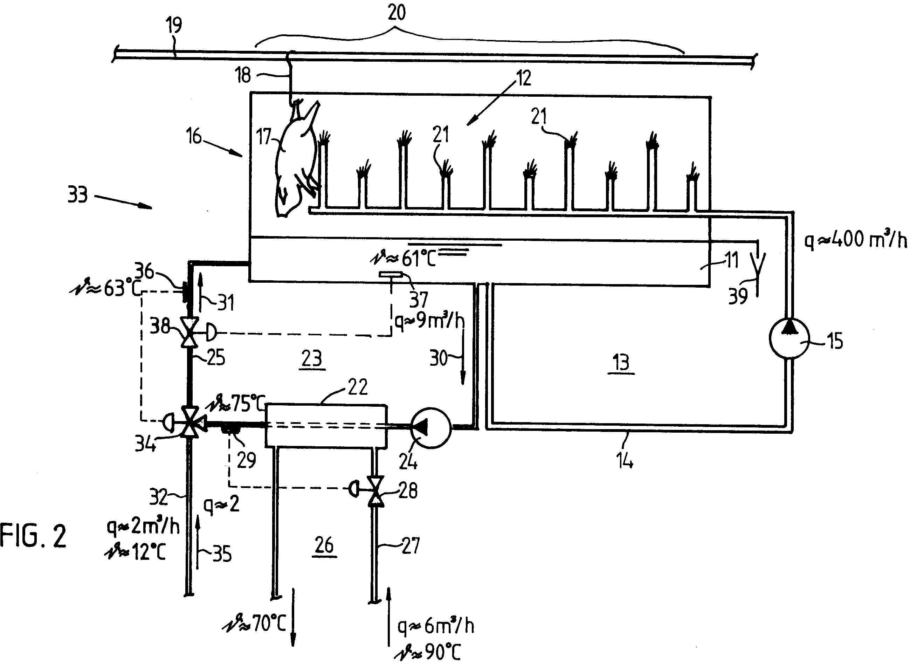

Zum Brühen werden die Schlachttierkörper 17 an Haken 18 hängend mittels einer Rohrbahn 19 innerhalb des Brühtunnels 16 längs einer Brühstrecke 20 gefördert. Exemplarisch für die kontinuierlich aufeinanderfolgend geförderten Schlachttierkörper 17 ist in Fig. 1 ein Schweinekörper beim Eintritt in den Brühtunnel 16 dargestellt. Zur Förderung der Schlachttierkörper 17 durch den Brühtunnel 16 ist dieser eingangsseitig mit einer Einförderöffnung, ausgangsseitig mit einer Ausförderöffnung sowie oberseitig mit einem Längsschlitz zur Durchführung der Haken 18 versehen, wobei die Einförderöffnung, die Ausförderöffnung und der Längsschlitz in der schematischen Darstellung gemäß den Figuren 1 und 2 nicht näher gezeigt sind.

Beim Transport längs der Brühstrecke 20 werden die Schlachttierkörper 17 mit aus Austrittsöffnungen 21 der Wasseraustrittseinrichtung 12 austretendem Brühwasser beaufschlagt, so daß eine kontinuierliche Aufweichung der Tierhaut erfolgt, wodurch das dem Transport durch die Brühvorrichtung 10 nachgeordnete Enthaaren der Schlachttierkörper 17 erleichtert wird.

Die Brühvorrichtung 10 ist mit einer Wärmezufuhreinrichtung 22 versehen, die erfindungsgemäß in einem Temperierungskreislauf 23 angeordnet ist. Der Temperierungskreislauf 23 weist darüber hinaus eine mit einer Umwälzpumpe 24 versehene Pumpleitung 25 auf. Als Wärmeübertragungsmedium für die bei dem hier dargestellten Ausführungsbeispiel als Wärmetauscher ausgeführte Wärmezufuhreinrichtung 22 dient in einem Heizkreislauf 26 zirkulierendes Wasser einer hier nicht näher dargestellten Heizungseinrichtung zur Beheizung des Schlachthofs. Zur Einstellung des Heißwasserzuflusses zum Wärmetauscher 22 ist in einem Zulauf 27 zum Wärmetauscher 22 ein Thermostatventil 28 vorgesehen, das das dem Wärmetauscher 22 zuströmende Heißwasservolumen entsprechend der mittels eines Temperaturfühlers 29 gemessenen Wärmetauscher-Austrittstemperatur und somit die Entkeimungstemperatur einstellt, die im Fall des Ausführungsbeispiels gemäß Fig. 1 der Temperatur des Temperierungsvolumens 31 entspricht.

Bei dem erfindungsgemäßen Betrieb der in Fig. 1 dargestellten Brühvorrichtung 10 wird ein Teil des im Brühkreislauf 13 zirkulierenden Brühwasservolumens in den Temperierungskreislauf 23 geleitet, um dort im Wärmetauscher 22 aufgeheizt und dem Brühkreislauf 13 wieder zugeführt zu werden. Hierzu wird bei der in Fig. 1 dargestellten Brühvorrichtung 10 ein Brühwasserteilvolumen 30 dem Wasserbehälter 11, der das aus der Wasseraustrittseinrichtung 12 austretende Brühwasser stationär aufnimmt bevor es durch die Pumpleitung 14 der Wasseraustrittseinrichtung 12 wieder zugeleitet wird, mittels der Pumpleitung 25 entnommen und nach Aufheizung im Wärmetauscher 22 als Temperierungsvolumen 31 dem Wasserbehälter 11 durch die Pumpleitung 25 wieder zugeleitet. Im Wasserbehälter 11 findet dann infolge der Durchmischung des stationären Brühwasservolumens mit dem zuströmenden Temperierungsvolumen die Einstellung der zum Brühen der Schlachttierkörper 17 erforderlichen Brühtemperatur statt.

Die Einstellung der Brühtemperatur erfolgt mittels eines Temperaturfühlers 37 im Wasserbehälter 11, der mit einem Thermostatventil 38 zusammenwirkt, das den Zustrom des Temperierungsvolumens 31 in den Wasserbehälter 11 beeinflußt.

Da im Temperierungskreislauf 23 lediglich ein Teil des im Brühwasserkreislauf 13 zirkulierenden Brühwasservolumens mittels des Wärmetauschers 22 aufgeheizt wird, ist es notwendig, daß das dem Wasserbehälter 11 zuströmende Temperierungsvolumen eine Temperatur oberhalb der zum Brühen der Schlachttierkörper 17 erforderlichen Brühtemperatur aufweist, damit nach Durchmischung mit dem kälteren, stationären Brühwasservolumen im Wasserbehälter 11 schließlich die erforderliche Brühtemperatur erreicht wird.

Für den Energiebedarf einer Brühvorrichtung ist es ohne Einfluß, ob die zum Brühen notwendige Brühtemperatur mittels einer Aufheizung des gesamten Brühwasservolumens auf die Brühtemperatur oder mittels der Aufheizung eines Brühwasserteilvolumens auf eine oberhalb der Brühtemperatur liegende Temperatur und einer nachfolgenden Zumischung des Brühwasserteilvolumens zum Brühwasservolumen erreicht wird. Die Aufheizung des Brühwasserteilvolumens auf eine oberhalb der Brühtemperatur liegende Temperatur bietet jedoch den Vorteil, daß eine weitreichendere Entkeimung erreicht wird als bei einer Aufheizung des gesamten Brühwasservolumens auf die Brühtemperatur. Untersuchungen von in einer Brühvorrichtung verwendetem Brühwasser haben ergeben, daß bei Durchführung des Brühens ein nennenswerter Keimanstieg, also eine wesentliche Vermehrung von Bakterien im Brühwasser, sich über einen Zeitraum von mehreren Stunden erstreckt. Eine Reduzierung des Keimanstiegs beziehungsweise dessen Verhinderung läßt sich also dann erreichen, wenn der Brühwasserteilvolumenstrom im Temperierungskreislauf so bemessen ist, daß etwa während einer Stunde das gesamte Brühwasservolumen den Temperierungskreislauf beziehungsweise den Wärmetauscher durchströmt.

Zur näheren Erläuterung der vorstehenden Ausführungen soll die Durchführung des erfindungsgemäßen Verfahrens mittels einer um eine Kaltwasserzuführung 32 ergänzten Brühvorrichtung 33 unter Angabe detaillierter Mengen- und Temperaturangaben dargestellt werden.

Die in Fig. 2 dargestellte Brühvorrichtung 33 weist neben den aus der Brühvorrichtung 10 gemäß Fig. 1 bekannten Teilen, die in Fig. 2 mit gleichen Bezugszeichen versehen sind, die Kaltwasserzuführung 32 auf, die über eine Ventileinrichtung 34 an den Temperierungskreislauf 23 angeschlossen ist und die kontinuierliche Zuführung von Frischwasser ermöglicht. Die beim Versuchsbetrieb der Anmelderin mit der in Fig. 2 dargestellten Brühvorrichtung 33 gemessenen Temperatur- und Volumenstromwerte sind bei den entsprechenden Meßpunkten in die schematische Darstellung gemäß Fig. 2 eingetragen.

Der über die Kaltwasserzuführung 32 dem Temperierungskreislauf 23 zugeführte Kaltwasservolumenstrom 35 dient sowohl zum Ausgleich von Volumenverlusten im Brühkreislauf 13 infolge des beim Austritt der Schlachttierkörper 17 aus dem Brühtunnel 16 auf diesen verbleibenden Brühwassermengen als auch zur Zuführung von Frischwasser, um den Verschmutzungsgrad des Brühwassers in Grenzen zu halten. Bei einer Ausführung der Brühvorrichtung gemäß Fig. 1 kann eine Ergänzung des Brühwasservolumens durch Auffüllen des Wasserbehälters, etwa nach Beendigung des Betriebs der Brühvorrichtung, erfolgen. Zur Verhinderung übermäßiger Verschmutzung des Brühwassers kann - wie natürlich auch bei dem Ausführungsbeispiel gemäß Fig. 2 - eine Filtereinrichtung vorgesehen werden. Im Versuchsbetrieb wurden etwa 9 Liter Frischwasser pro Schwein dem Brühwasser zugemischt. Zur Einstellung der Temperatur des sich aus dem Brühwasserteilvolumenstrom 30 und dem Kaltwasservolumenstrom 35 ergebenden Temperierungsvolumenstroms 31 ist die Ventileinrichtung 34 als Thermostatventil ausgeführt, das über einen Temperaturfühler 36 angesteuert wird. Zum Konstanthalten des vom Wasserbehälter 11 aufgenommenen Brühwasservolumens ist dieser mit einem Überlauf 39 versehen.

Das stationär im Umlauf befindliche gesamte Brühwasservolumen beträgt etwa 9m³. Wie aus den Angaben in Fig. 2 zu ersehen ist, beträgt das Verhältnis zwischen dem Brühwasservolumenstrom im Brühkreislauf 13 zum Brühwasserteilvolumen im Temperierkreislauf 23 etwa 10. Bei einer Zuführung eines Kaltwasservolumenstroms 35 von etwa 2 m³/h mit einer Temperatur von 12°C ist eine Aufheizung des Brühwasserteilvolumen 30 im Wärmetauscher 22 des Temperierkreislaufs 23 auf 75°C notwendig, um eine Brühtemperatur von 61°C zu erreichen. Die Temperatur des Temperierungsvolumenstroms 31 beträgt dabei vor dem Eintritt in den Wasserbehälter 11 etwa 63°C. Im Versuchsbetrieb wurden 250 Schweinekörper pro Stunde längs der Brühstrecke 20 gefördert.

Beim Versuchsbetrieb der Brühvorrichtung 33 wurde als Wärmezuführeinrichtung 22 ein Wärmetauscher eingesetzt, der an den Heizkreislauf 26 des Schlachthofs angeschlossen war. Das durch den Wärmetauscher 22 mit etwa 6 m³/h geförderte Heißwasser hatte eine Wärmetauscher-Eintrittstemperatur von etwa 90°C und eine Wärmetauscher-Austrittstemperatur von etwa 70°C. Natürlich ist es auch möglich, andere Einrichtungen als Wärmezufuhreinrichtungen beim Betrieb der erfindungsgemäßen Brühvorrichtung zu nutzen. So ist eine direkte Einblasung von Heißdampf in den Brühwasserteilvolumenstrom 30 ebenso vorstellbar, wie etwa eine elektrische Beheizung des Brühwasserteilvolumens 30.

Die erfindungsgemäße Brühvorrichtung muß nicht notwendigerweise eine eigenständige Vorrichtungseinheit darstellen. Genausogut ist es vorstellbar, die erfindungsgemäße Brühvorrichtung mit einer Enthaarungseinrichtung unmittelbar zu kombinieren, so daß wegen des Wegfalls einer Zwischenförderstrecke zwischen der Brühvorrichtung und der Enthaarungsvorrichtung ein für den Enthaarungsvorgang nachteiliges Abkühlen der Schlachttierkörper vor Eintritt in die Enthaarungsvorrichtung vermieden wird.

## Patentansprüche

1. Verfahren zum Brühen von Schlachttierkörpern, insbesondere Schweinekörpern, mit einer eine Wasseraustrittseinrichtung aufweisenden Brühstrecke in einem Wasserkreislauf (Brühkreislauf), der mit einem Wasserbehälter zur Aufnahme von aus der Wasseraustrittseinrichtung austretendem Brühwasser und einer Pumpleitung zur Zuleitung eines im Wasserbehälter aufgenommenen, stationären Brühwasservolumens zur Wasseraustrittseinrichtung versehen ist, wobei eine Wärmezuführeinrichtung zur Temperierung des Brühwassers auf eine vorgegebene Temperatur (Brühtemperatur) dient,
dadurch gekennzeichnet, daß ein Brühwasserteilvolumen (30) aus dem Brühkreislauf (13) heraus, durch die Wärmezuführeinrichtung (22) hindurch und als Temperierungsvolumen (31) mit einer Temperatur oberhalb der Brühtemperatur in den Brühkreislauf (13) zurückgeführt wird.

2. Verfahren nach Anspruch 1, dadurch gekennzeichnet, daß das Brühwasserteilvolumen (30) dem Wasserbehälter (11) entnommen, durch die Wärmezuführeinrichtung (22) hindurch und in den Wasserbehälter (11) zurückgeführt wird.

3. Verfahren nach Anspruch 1, dadurch gekennzeichnet, daß das Brühwasserteilvolumen (30) der Pumpleitung (14) entnommen, durch die Wärmezuführeinrichtung (22) hindurch und in den Wasserbehälter (11) zurückgeführt wird.

4. Verfahren nach Anspruch 1, dadurch gekennzeichnet, daß das Brühwasserteilvolumen (30) der Pumpleitung (14) entnommen, durch die Wärmezuführeinrichtung (22) hindurch und in die Pumpleitung (14) zurückgeführt wird.

5. Verfahren nach Anspruch 1, dadurch gekennzeichnet, daß das Brühwasserteilvolumen (30) dem Wasserbehälter (11) entnommen, durch die Wärmezuführeinrichtung (22) hindurch und in die Pumpleitung (14) zurückgeführt wird.

6. Verfahren nach einem oder mehreren der vorangehenden Ansprüche, dadurch gekennzeichnet, daß dem in der Wärmezuführeinrichtung (22) aufgeheizten Brühwasserteilvolumen (30) ein Kaltwasservolumen (35) zugeführt wird.

7. Verfahren nach einem oder mehreren der vorangehenden Ansprüche, dadurch gekennzeichnet, daß in der Wärmezuführeinrichtung (22) eine Aufheizung des Brühwasserteilvolumen (30) auf mindestens 70°C erfolgt.

8. Verfahren nach einem oder mehreren der vorangehenden Ansprüche, dadurch gekennzeichnet, daß die Temperatur des Temperierungsvolumens (31) vor Eintritt in den Brühkreislauf (13) mindestens 60°C beträgt.

9. Vorrichtung zum Brühen von Schlachttierkörpern, insbesondere Schweinekörpern, mit einer eine Wasseraustrittseinrichtung aufweisenden Brühstrecke in einen Wasserkreislauf (Brühkreislauf), der mit einem Wasserbehälter zur Aufnahme von aus der Wasseraustrittseinrichtung austretendem Brühwasser und einer Pumpleitung zur Zuleitung eines im Wasserbehälter aufgenommenen, stationären Brühwasservolumens zur Wasseraustrittseinrichtung versehen ist, wobei eine Wärmezuführeinrichtung zur Temperierung des Brühwassers auf eine vorgegebene Temperatur (Brühtemperatur) dient, insbesondere zur Durchführung des Verfahrens nach einem oder mehreren der Ansprüche 1 bis 8, dadurch gekennzeichnet, daß die Wärmezuführeinrichtung (22) in einem weiteren Wasserkreislauf (Temperierungskreislauf 23) zur Umwälzung eines Brühwasserteilvolumens (30) angeordnet ist.

10. Vorrichtung nach Anspruch 9, dadurch gekennzeichnet, daß der Temperierungskreislauf (23) die Wärmezuführeinrichtung (22) und eine die Wärmezuführeinrichtung (22) mit dem Brühkreislauf (13) verbindende Pumpleitung (25) aufweist.

11. Vorrichtung nach Anpruch 10, dadurch gekennzeichnet, daß die Pumpleitung (25) eingangs- und ausgangsseitig mit dem Wasserbehälter (11) verbunden ist.

12. Vorrichtung nach einem oder mehreren der vorangehenden Ansprüche, dadurch gekennzeichnet, daß die Pumpleitung (25) eingangsseitig mit der Pumpleitung (14) des Brühkreislaufs (13) und ausgangsseitig mit dem Wasserbehälter (11) verbunden ist.

13. Vorrichtung nach einem oder mehreren der vorangehenden Ansprüche, dadurch gekennzeichnet, daß die Pumpleitung (25) eingangsseitig und ausgangsseitig mit der Pumpleitung (14) des Brühkreislaufs (13) verbunden ist.

14. Vorrichtung nach einem oder mehreren der vorangehenden Ansprüche, dadurch gekennzeichnet, daß die Pumpleitung (25) eingangsseitig mit dem Wasserbehälter (11) und ausgangsseitig mit der Pumpleitung (14) des Brühkreislaufs (13) verbunden ist.

15. Vorrichtung nach einem oder mehreren der vorangehenden Ansprüche, dadurch gekennzeichnet, daß die Brühstrecke (20) in einem zumindest eine Einförderöffnung und eine Ausförderöffnung aufweisenden Gehäuse, insbesondere einem Brühtunnel (16), angeordnet und durch einen Förderabschnitt eines Schlachttierförderers (19), insbesondere eines Rohrbahnförderers, gebildet ist.

16. Vorrichtung nach Anspruch 15, dadurch gekennzeichnet, daß die Einförderöffnung und die Ausförderöffnung zusammenhängend ausgebildet sind.

17. Vorrichtung nach einem oder mehreren der vorangehenden Ansprüche, dadurch gekennzeichnet, daß vorzugsweise ausgangsseitig von der Wärmezuführeinrichtung (22) eine Kaltwasserzuführung (32) an die Pumpleitung (25) des Temperierungskreislaufs (23) angeschlossen ist.

18. Vorrichtung nach einem oder mehreren der vorangehenden Ansprüche, dadurch gekennzeichnet, daß die Wärmezuführeinrichtung als Wärmetauscher (22) ausgebildet ist.

19. Vorrichtung nach Anspruch 18, dadurch gekennzeichnet, daß der Wärmetauscher (22) zur Aufheizung des Brühwasserteilvolumens (30) im Temperierungskreislauf (23) an eine unabhängig von der Brühvorrichtung betreibbare Heizungseinrichtung, insbesondere eine Einrichtung zur Raumbeheizung eines Schlachthofs, angeschlossen ist.

20. Vorrichtung nach einem oder mehreren der vorangehenden Ansprüche, dadurch gekennzeichnet, daß die Wärmezuführeinrichtung (22) aus einer Einrichtung zum Einblasen von Heißdampf gebildet ist.

21. Vorrichtung nach einem oder mehreren der vorangehenden Ansprüche, dadurch gekennzeichnet, daß die Wärmezuführeinrichtung (22) aus einer elektrisch beheizbaren Einrichtung gebildet ist.
